# EUROPÄISCHE PATENTSCHRIFT

(11) **EP 3 597 483 B1**
(45) Veröffentlichungstag und Bekanntmachung des Hinweises auf die Patenterteilung: **23.06.2021**
(21) Anmeldenummer: 19186406.5
(22) Anmeldetag: 16.07.2019
(51) Int. Cl.: B60P 7/13

(54) **SICHERUNG EINES BEHÄLTERS**
SECURING OF A CONTAINER
FIXATION D'UN RÉCIPIENT

(30) Priorität: 16.07.2018 DE 102018117153
(43) Veröffentlichungstag der Anmeldung: 22.01.2020
(73) Patentinhaber: DAHER NUCLEAR TECHNOLOGIES GmbH, 63457 Hanau (DE)
(72) Erfinder: KORN, Alois, 63637 Jossgrund (DE); HEYL, Stephan, 64823 Groß-Umstadt (DE)
(74) Vertreter: Stoffregen, Hans-Herbert

(56) Entgegenhaltungen:
- CH-A2- 708 136
- DE-U1-202016 001 996
- US-A- 3 752 511
- US-A- 4 129 395

## Beschreibung

Die Erfindung bezieht sich auf eine Sicherung zwischen einem Beschlag, wie Containerecke nach ISO 1161, eines Behälters, insbesondere Container, vorzugsweise ISO Container, und einem in den Beschlag eingebrachten einen Kopf aufweisenden Zapfen einer Verriegelung, wobei der Beschlag ein quaderförmiger Hohlkörper ist, dessen Bodenfläche eine erste Durchbrechung und zwei aneinandergrenzende Seitenwandungen eine zweite und eine dritte Durchbrechung aufweisen, wobei die erste Durchbrechung bei verriegeltem Beschlag von dem Zapfen durchsetzt ist, der seinerseits mit seinem Kopf abschnittsweise an der Innenfläche der Bodenwandung anliegt, die Sicherung ein die zweite oder die dritte Durchbrechung durchsetzendes Sicherungselement aufweist, das ein axiales Verstellen des Zapfens unterbindet. Dabei kann insbesondere die Sicherung ein die zweite oder die dritte Durchbrechung durchsetzendes Sicherungselement aufweisen, das ein zum Anheben und Drehen des Zapfens erforderliches axiales Verstellen des Zapfens unterbindet.

Die Erfindung bezieht sich auch auf ein Verfahren zum Sichern eines Behälters, wie Containers, durch Eingreifen einer Verriegelung in einen Beschlag, insbesondere Containerecke nach ISO 1161, wobei der Beschlag ein quaderförmiger Hohlkörper ist, dessen Bodenfläche eine erste Durchbrechung und zwei aneinandergrenzende Seitenwandungen eine zweite und eine dritte Durchbrechung aufweisen, wobei die erste Durchbrechung bei verriegeltem Beschlag von dem Zapfen durchsetzt ist, der seinerseits mit seinem Kopf abschnittsweise an der Innenfläche der Bodenwandung anliegt, und wobei in den Beschlag ein Sicherungselement eingebracht wird, das ein axiales Verstellen des Zapfens unterbindet.

Zum Transport von Gütern aller Art werden weltweit Container eingesetzt, z.B. solche gemäß ISO 1496. Zur Arretierung auf dem jeweiligen Transportmittel und zur Handhabung sind diese Container mit ISO-Ecken gemäß ISO 1161 ausgestattet. Zur Arretierung der Container auf Straßen- und Schienenfahrzeugen dienen Container-Standardverriegelungen, sogenannte Twistlock-Verriegelungen.

Diese Verriegelungen besitzen üblicherweise einen drehbaren Zapfen, der in die Containerecke eingeführt werden kann, eine Gewindespindel mit Handrad und eine Feststellvorrichtung, die ein unbeabsichtigtes Lösen der Verriegelung verhindert. Zum Verriegeln wird der Zapfen in die Containerecke eingeführt und um 90° gedreht, so dass dieser auf der Innenfläche der Bodenwandung der Containerecke aufliegt und mit der mittels des Handrads betätigten Spindel nach unten gezogen wird. Anschließend wird die Spindel mittels der Feststellvorrichtung arretiert. Zum Öffnen der Verriegelung muss die Spindel gelöst und der Zapfen angehoben werden, um aus der Verriegelungsstellung in die Offen-Stellung gedreht werden zu können.

Entsprechende Standard-Containerverriegelungen zeigen den Vorteil einer leichten und schnellen Bedienbarkeit. Bei wertvoller bzw. sensitiver Beladung des Containers ist jedoch eine zusätzliche Sicherung wünschenswert bzw. aufgrund von Vorschriften erforderlich, um sicherzustellen, dass eine Verriegelung nur von autorisierten Personen geöffnet werden kann.

Der US 3,752,511 A und der US 4,129,395 A sind Sicherungen zwischen einem Beschlag eines Containers und einem in den Beschlag eingebrachten einen Kopf aufweisenden Zapfen einer Verriegelung zu entnehmen. Dabei ist in den Zapfen ein Sicherungselement steckbar, um ein ungewolltes Drehen des Zapfens auszuschließen. US 3 752 511 A1 offenbart den Oberbegriff des Anspruchs 1.

Der vorliegenden Erfindung liegt die Aufgabe zugrunde, eine Sicherung zwischen einem Beschlag, wie Containerecke nach ISO 1161, und einem Behälter, wie Container, insbesondere ISO Container, wie ISO 1496 Container, zur Verfügung zu stellen, die konstruktiv einfach aufgebaut ist, ohne dass Änderungen an der Containerecke bzw. der Verriegelung erforderlich sind.

Zur Lösung der Aufgabe sieht die Erfindung im Wesentlichen vor, dass bei in dem Beschlag eingebrachtem Sicherungselement sich das Sicherungselement zumindest abschnittsweise zwischen dem Kopf des Zapfens und Innenfläche der Kopfwandung des Beschlages erstreckt, und/oder dass bei in dem Beschlag eingebrachten Sicherungselement dieses an einer Seitenfläche des Kopfes angrenzt oder an dieser anliegt.

Erfindungsgemäß wird in den Beschlag ein Element eingebracht, das sicherstellt, dass ein axiales Verstellen des Zapfens und damit ein Anheben des Kopfes des Zapfens nicht erfolgen kann, so dass der Zapfen nicht gedreht und somit ein Lösen des Behälters von der Verriegelung ausgeschlossen ist.

Insbesondere ist vorgesehen, dass der Zapfen mittels einer Spindel axial verstellbar ausgebildet ist.

Bevorzugterweise sieht die Erfindung vor, dass bei in den Beschlag eingebrachtem Sicherungselement sich dieses zumindest abschnittsweise zwischen dem Kopf des Zapfens und Kopfwandung des Beschlages erstreckt bzw. an dem Kopf und der Kopfwandung anliegt oder mit Spiel zu diesen verläuft, so dass ein ein Drehen des Kopfes ermöglichendes axiales Verstellen ausgeschlossen ist. Somit ist auf einfache Weise sichergestellt, dass auch bei gelöster Feststellvorrichtung ein Drehen der Spindel nicht in einem Umfang erfolgen kann, dass der Zapfen in einem Umfang gedreht werden kann, dass die die Bodenwandung aufweisende Durchbrechung durchsetzt werden kann, wodurch der Container von der Auflage entfernbar wäre.

Die Erfindung zeichnet sich auch dadurch aus, dass bei in den Beschlag eingebrachtem Sicherungselement dieses an einer Seitenfläche des Kopfes des Zapfens angrenzt bzw. anliegt. Hierdurch ist gleichfalls ein Drehen des Zapfens ausgeschlossen.

Selbstverständlich besteht auch die Möglichkeit, dass das Sicherungselement sowohl abschnittsweise zwischen Kopf des Zapfens und Innenfläche der Kopfwandung des Beschlages und seitlich entlang einer Seitenfläche des Zapfens verläuft bzw. an diesem anliegt.

Insbesondere zeichnet sich die Erfindung dadurch aus, dass die Sicherung ein plattenförmiges Basiselement aufweist, von dem ein vorzugsweise stab- oder plattenförmiges erstes und beabstandet zu diesem ein vorzugsweise stab- oder plattenförmiges zweites Element ausgehen, dass bei gesichertem Beschlag sich das Basiselement entlang einer der die Durchbrechung aufweisenden Seitenflächen erstreckt, dass das erste Element sich entlang der anderen die Durchbrechung aufweisenden Seitenfläche erstreckt und ein Verriegelungselement durchsetzt, das seinerseits die Durchbrechung der Seitenwandung durchsetzt, entlang der sich das erste Element erstreckt, und dass das zweite Element die Durchbrechung der Seitenwandung, entlang der das Basiselement verläuft, durchsetzt.

Mittels der konstruktiv einfach aufgebauten zwei Bauteile umfassenden Sicherung wird ein axiales Verstellen des Zapfens unterbunden.

Des Weiteren ist ein Verschlusselement vorhanden, das sicherstellt, dass das erste Element aus dem Verriegelungselement nicht herausgezogen werden kann. Insbesondere handelt es sich hierbei um einen Bügel eines Schlosses. Andere Lösungsmöglichkeiten sind gleichfalls möglich. So kann das erste Element in seinem Endbereich selbst als Schloss ausgebildet sein, das das ungewollte Herausziehen des ersten Elements aus dem Verriegelungselement unterbindet.

Insbesondere ist vorgesehen, dass das zweite Element, das die Öffnung einer der Seitenwandungen durchsetzt, entlang der sich das plattenförmige Basiselement erstreckt, das Sicherungselement selbst ist.

Das zweite Element ist hierzu insbesondere als ein senkrecht zu dem Basiselement verlaufendes Element ausgebildet, das zumindest abschnittsweise formschlüssig mit dem Zapfenkopf zusammenwirken kann. Geeignet hierfür ist z.B. ein offenes Hohlzylinderelement, dessen Ränder entlang gegenüberliegender Seiten des dachförmigen Kopfbereichs des Zapfens verlaufen und an diesem anliegen können. Andere abschnittsweise bereichsweise die Negativform des Zapfenkopfes aufweisende Elemente wie Formteile kommen gleichfalls in Frage.

Um das zweite Element mit dem Kopf des Zapfens wechselwirken zu lassen, kann des Weiteren vorgesehen sein, dass von dem Hohlzylinderelement ein sich in Richtung Innenfläche der Kopfwandung des Beschlags erstreckendes vorzugsweise plattenförmiges und insbesondere in Längsrichtung des Hohlzylinderelements verlaufendes Abstandselement ausgeht, das sich vorzugsweise an der Innenfläche der Kopfwandung abstützt. Hierdurch wird sichergestellt, dass die Ränder des Hohlzylinderelements am Kopf des Zapfens anliegen oder in einem so geringen Umfang zu dem Kopf beabstandet sind, dass ein Drehen ausgeschlossen ist.

Alternativ besteht die Möglichkeit, dass das Sicherungselement das Verriegelungselement ist, das vorzugsweise ein Bolzenelement mit im Schnitt ovaler Geometrie ist, dessen innerhalb des Beschlages verlaufendes Ende vorzugsweise eine zapfenkopfseitig verlaufende Stufe aufweist, die entlang einer Seitenfläche des Kopfes des Zapfens und abschnittsweise oberhalb von diesem verläuft. Die Querschnittsgeometrie des Verriegelungselements sollte der der Öffnung in der Seitenwandung entsprechen.

Das Verriegelungselement kann des Weiteren insbesondere dann, wenn es nicht die Funktion des Sicherungselements ausübt, derart ausgebildet sein, dass beabstandet von der von dem ersten Element durchsetzten Durchbrechung zumindest ein abragender Vorsprung ausgeht, der bei in dem Beschlag eingebrachtem Verriegelungselement entlang Innenfläche der von dem Verriegelungselement durchsetzten Seitenwandungen verläuft. Insbesondere wird das Verriegelungselement von einem senkrecht zur Längsachse des Verriegelungselementes verlaufenden Bolzen durchsetzt, der sich zu beiden Seiten des Verriegelungselementes erstreckt und den Vorsprung bildet.

Ein Verfahren zum Sichern eines Behälters zuvor beschriebener Art zeichnet sich dadurch aus, dass das Sicherungselement derart in dem Beschlag positioniert wird, dass dieses zwischen dem Kopf des Zapfens und Innenfläche der Kopfwandung zumindest abschnittsweise verläuft und/oder an einer Seitenfläche des Kopfes des Zapfens angrenzt oder an dieser anliegt.

Die erfindungsgemäßen Maßnahmen stellen kumulativ oder alternativ sicher, dass ein Drehen des Zapfens und damit ein Lösen des Behälters von der Auflage nicht möglich ist.

Die Erfindung zeichnet sich insbesondere auch aus durch eine Sicherung zwischen einem Beschlag eines Behälters und einem in den Beschlag eingebrachten einen Kopf aufweisenden Zapfen einer Verriegelung, wobei der Beschlag ein Hohlkörper ist, dessen Bodenwandung eine erste Durchbrechung und zwei aneinandergrenzende Seitenwandungen eine zweite und eine dritte Durchbrechung aufweisen, wobei die erste Durchbrechung bei verriegeltem Beschlag von dem Zapfen durchsetzt ist, der seinerseits mit seinem Kopf abschnittsweise auf der Innenfläche der Bodenwandung anliegt, und wobei die Sicherung ein die zweite oder die dritte Durchbrechung durchsetzendes Sicherungselement aufweist, das ein zum Anheben und Drehen des Zapfens erforderliches axiales Verstellen des Zapfens unterbindet, wobei das bei in dem Beschlag eingebrachte Sicherungselement sich das Sicherungselement zumindest abschnittsweise zwischen dem Kopf des Zapfens und Innenfläche der Kopfwandung des Beschlages erstreckt oder dass bei in dem Beschlag eingebrachtem Sicherungselement dieses an einer Seitenfläche des Kopfes angrenzt oder an dieser anliegt.

Auch ist die Erfindung gekennzeichnet durch eine Sicherung zwischen einem Beschlag, wie Containerecke nach ISO 1161, eines Behälters, insbesondere Containers, vorzugsweise Container nach ISO 1496, und einem in den Beschlag eingebrachten einen Kopf aufweisenden Zapfen einer Verriegelung, insbesondere Twistlock-Verriegelung, wobei der Beschlag ein Hohlkörper ist, dessen Bodenwandung eine erste Durchbrechung und zwei aneinandergrenzende Seitenwandungen eine zweite und eine dritte Durchbrechung aufweisen, wobei die erste Durchbrechung bei verriegeltem Beschlag von dem Zapfen durchsetzt ist, der seinerseits mit seinem Kopf abschnittsweise auf der Innenfläche der Bodenwandung anliegt, und wobei der Zapfen mittels einer Spindel axial verstellbar ausgebildet ist. Dabei ist vorgesehen, dass die Sicherung ein die zweite oder die dritte Durchbrechung durchsetzendes Sicherungselement aufweist, das ein axiales Verstellen des Zapfens unterbindet.

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung von der Zeichnung zu entnehmenden bevorzugten Ausführungsbeispielen.

Es zeigen:

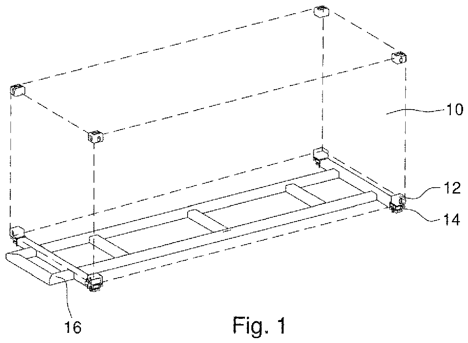

- Fig. 1: eine Prinzipdarstellung eines auf an einem Rahmen, z.B. eines Aufliegers eines Straßen- oder Schienenfahrzeuges gesicherten Containers,
- Fig. 2: eine Verriegelung,
- Fig. 3: die Verriegelung gemäß Fig. 2 mit Containerecke,
- Fig. 4: ein erstes Ausführungsbeispiel einer Sicherung zwischen der Verriegelung und der Containerecke, teilweise in Explosionsdarstellung,
- Fig. 5: die aus der Verriegelung, der Containerecke und der Sicherung gemäß Fig. 4 bestehende Anordnung in Seitenansicht,
- Fig. 6: einen Schnitt entlang der Linie A-A in Fig. 5,
- Fig. 7: einen Schnitt entlang der Linie B-B in Fig. 5,
- Fig. 8: die Containerecke im gesicherten Zustand,
- Fig. 9: eine zweite Ausführungsform einer Sicherung der Verriegelung und der Containerecke gemäß Fig. 3, teilweise in Explosionsdarstellung,
- Fig. 10: eine Seitenansicht der aus der Verriegelung, der Containerecke und der Sicherung bestehenden Anordnung gemäß Fig. 9,
- Fig. 11: einen Schnitt entlang der Linie A-A in Fig. 10,
- Fig. 12: einen Schnitt entlang der Linie B-B in Fig. 10 und
- Fig. 13: die Anordnung gemäß Fig. 9 im sichernden Zustand.

Nachstehend wird die erfindungsgemäße Lehre anhand zweier Ausführungsbeispiele erläutert, die jedoch nicht schutzeinschränkend zu verstehen sind. Vielmehr wird durch die erfindungsgemäße Lehre der übergeordnete Gedanke abgesichert, dass ein Container 10, der Containerecken, insbesondere nach der Bauart nach ISO 1161 aufweist, über eine Verriegelung 14 mit z.B. einem Rahmen 16, der sich z.B. auf einem Auflieger z.B. eines Straßen- oder Schienenfahrzeuges befindet, gesichert verbunden wird, d.h., dass die Verbindung nur durch autorisierte Personen gelöst werden kann.

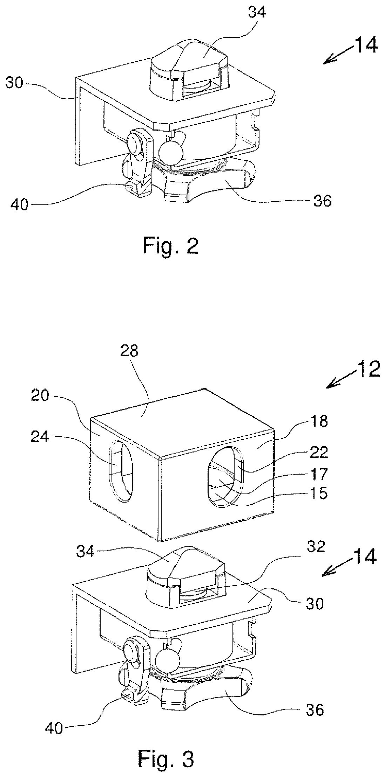

In den Fig. 2 und 3 sind entsprechende Containerecken 12 und eine Standardverriegelung 14 dargestellt. Die Containerecke 12 ist üblicherweise ein hohlquaderförmiger Körper z.B. aus Stahlguss. Die Containerecke 12 weist eine Bodenwandung 15 mit einer ersten Öffnung 17 aneinandergrenzende Seitenwandungen 18, 20 mit einer zweiten Durchbrechung 22 bzw. einer dritten Durchbrechung 24 auf. Die verbleibenden Seitenwandungen müssen keine Durchbrechungen aufweisen. Die Kopfwandung 28 kann geschlossen sein, wenn die Containerecke 12 bodenseitig vom Container 10 ausgeht.

Die Standardverriegelung 14 ist üblicherweise eine Twistlock-Verriegelung und besteht im Wesentlichen auch aus Metallguss. Die Standardverriegelung 14 weist einen L-förmigen Träger 30 auf, der im Ausführungsbeispiel von dem Rahmen 16 ausgeht. Der Träger 30 wird von einem Zapfen 32 mit vorzugsweise pyramidenförmigem Kopf 34 durchsetzt. Der Zapfen 34 ist über eine Gewindespindel mit Handrad 36 höhenverstellbar.

Nach Einführen des Zapfens 32 in die Containerecke 12 und Beabstandung der Unterseite des Kopfes 34 zur Innenfläche der Bodenwandung 15 wird der Kopf 34 um 90° gedreht, um sodann mittels der Spindel durch Drehen des Handrads 36 abgesenkt zu werden, damit ein kraftschlüssiges Aufliegen auf der Innenfläche der Bodenwandung 15 erfolgt.

Sodann wird ein weiteres Drehen mittels einer Verdrehsicherung 40 unterbunden. Wird diese wirkungslos, so kann erneut ein Drehen und damit Lösen der Verriegelung erfolgen. Somit wäre der Container 10 auf dem Rahmen 16 nicht gesichert.

Um ein ungewolltes Lösen zu unterbinden, ist eine Sicherung vorgesehen, die auch nach Lösen der Feststelleinrichtung 14 ein Drehen der Spindel und damit Anheben des Zapfens 32 verhindert.

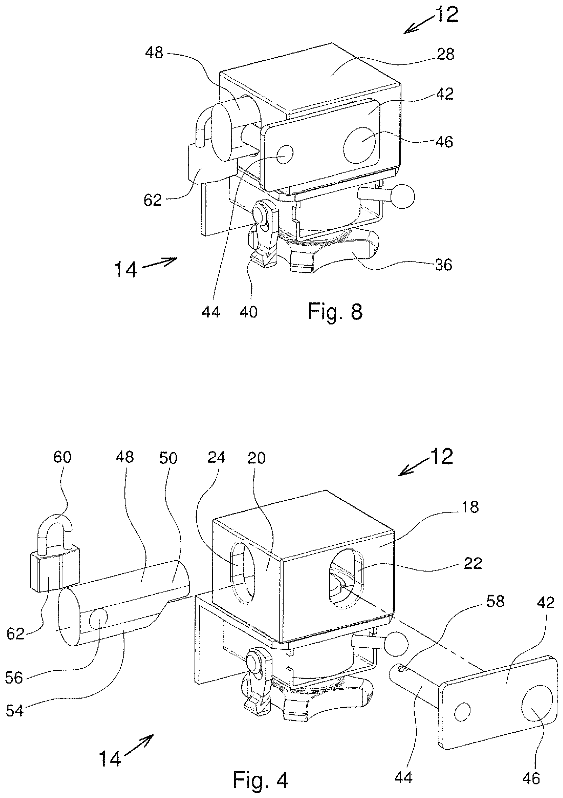

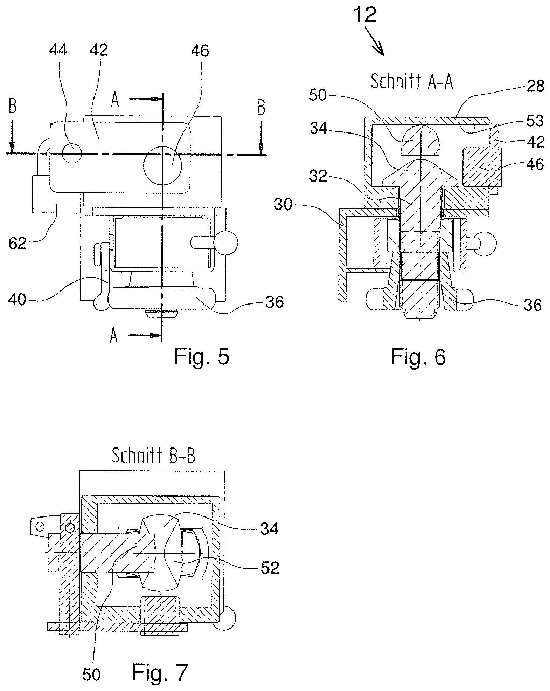

Ein erstes Ausführungsbeispiel einer entsprechenden Sicherung ist den Fig. 4 bis 8 zu entnehmen.

Die Sicherung weist ein plattenförmiges Basiselement 42 - nachstehend auch Querblech genannt - auf, von dem zwei im Ausführungsbeispiel stabförmige Elemente ausgehen, und zwar ein erstes Element 44 und ein zweites Element 46. Die entsprechenden auch als Bolzen zu bezeichnenden Elemente 44, 46 werden in Bohrungen des Querblechs 42 eingesetzt und mit diesem verschweißt.

Es besteht selbstverständlich auch die Möglichkeit, dass das Querblech 42 und die Bolzen 44, 46 einstückig z.B. als Schmiedeteil ausgebildet sind.

Wie sich aus den zeichnerischen Darstellungen ergibt, erstreckt sich das Querblech 42 dann, wenn ein Anheben des Zapfens 32 mit dem Kopf 34 unterbunden werden soll, im Ausführungsbeispiel entlang der Seitenwandung 18, die die zweite Durchbrechung 22 aufweist.

Gleichzeitig durchsetzt das zweite, auch als Bolzen zu bezeichnende Element 46 die zweite Durchbrechung 22.

Das erste Element 44 - gleichfalls auch als Bolzen zu bezeichnen - verläuft sodann entlang der angrenzenden Seitenwandung 20 mit der dritten Durchbrechung oder Öffnung 24.

Zuvor wird ein Verriegelungselement 48 über die dritte Durchbrechung 24 in die Containerecke 12 hineingeschoben. Das Verriegelungselement 48 weist an seinem innerhalb der Containerecke 12 verlaufenden Ende 50 eine Stufe auf, die geometrisch derart ausgebildet ist, dass diese entlang der Seitenfläche 52 des Kopfes 34 verläuft. Gleichzeitig erstreckt sich der Endbereich 50 zwischen der Innenfläche 53 der Kopfwandung 28 der Containerecke 12 und dem Kopf 34, wodurch außerdem ein axiales Verstellen des Zapfens 32 ausgeschlossen ist.

Das Verriegelungselement 48 weist eine Querschnittsgeometrie auf, die an die der dritten Öffnung 24 angepasst ist, wie sich insbesondere aus der Fig. 8 ergibt. Ferner ist im außerhalb der Containerecke 12 verlaufenden Bereich 54 des Verriegelungselements 48 eine Durchbrechung 56 vorhanden, die von dem ersten insbesondere stabförmigen Element 44 oder Bolzen durchsetzt wird, wie sich gleichfalls aus der Fig. 8 ergibt.

Endseitig weist das erste Element 44 eine Durchbrechung 58 auf, die von einem Bügel 60 eines Schlosses 62 durchsetzt wird, wenn die Sicherung verriegelt wird.

Anstelle eines Bügelschlosses 62 kann auch eine andere geeignete Verschlusseinrichtung benutzt werden.

Es besteht auch die Möglichkeit, das erste Element 44, das sich entlang der Seitenwandung 20 erstreckt und das das Verriegelungselement 48 durchsetzt, endseitig als Verschlusseinrichtung auszubilden.

Alternativ oder ergänzend kann auch das Verriegelungselement 48 endseitig eine Verschlusseinrichtung aufweisen oder als solche ausgebildet sein, wie z.B. in Form eines Druckschlosses, um ein unkontrolliertes Herausziehen des Bolzens 44 aus dem Verriegelungselement 48 auszuschließen.

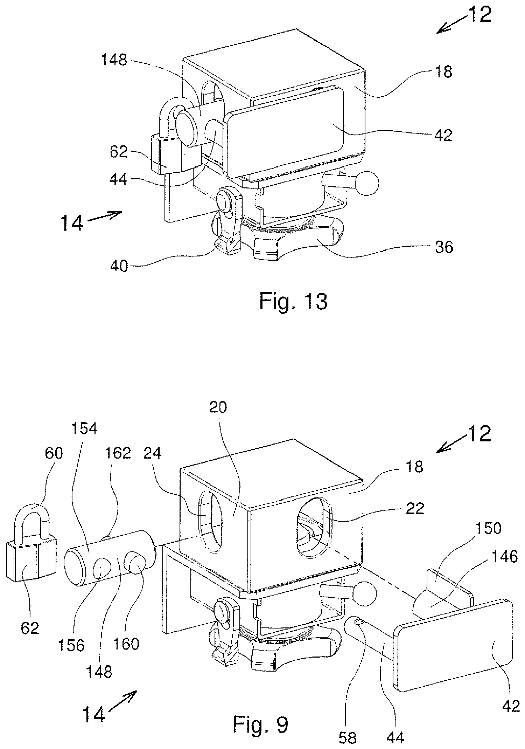

Den Fig. 9 bis 13 ist eine zweite Ausführungsform einer Sicherung zu entnehmen, um ein Anheben des Zapfens 34 der Verriegelung 14 auszuschließen. Dabei werden entsprechend dem ersten Ausführungsbeispiel für gleiche Elemente gleiche Bezugszeichen verwendet.

Entsprechend dem ersten Ausführungsbeispiel weist die Sicherung das plattenförmige Basiselement 42 auf, das sich entlang der Seitenwandung 18 dann erstreckt, wenn die verriegelte Containerecke 12 gesichert ist. Von dem Querblech 42 gehen gleichfalls das erste insbesondere stabförmige Element 44 sowie ein zweites Element 146 aus.

Parallel zum ersten Element 44 verläuft das zweite Element 146, das bei auf der Außenfläche der Seitenwandung 18 aufliegendem Querblech 42 die zweite Durchbrechung 22 durchsetzt und oberhalb des Kopfes 34 des über die Spindel drehbaren höhenverstellbaren Zapfens 32 derart verläuft, dass ein axiales Verstellen des Zapfens 32 in Richtung der Kopfwandung 28 der Containerecke 12 ausgeschlossen ist und somit ein Drehen des Kopfes 34.

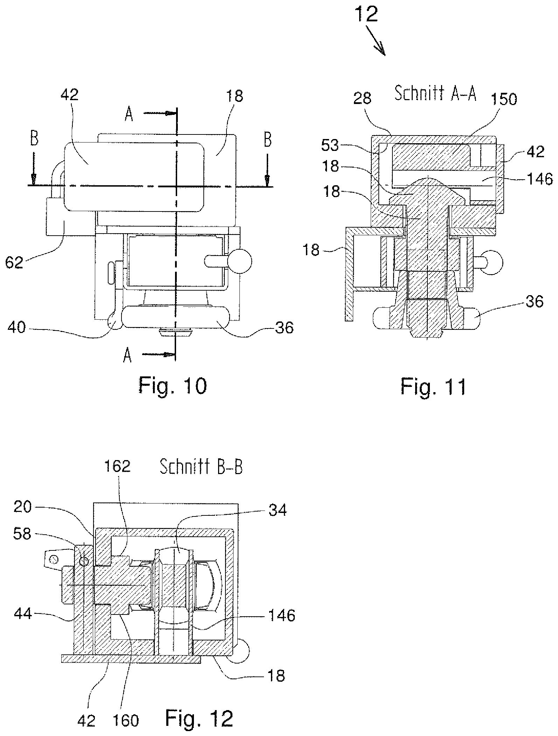

Hierzu ist insbesondere vorgesehen, dass das als Sicherungselement wirkende zweite Element 146 entsprechend der Darstellung gemäß Fig. 9 und 12 ein offener Hohlzylinder ist, dessen zueinander beabstandet verlaufende Längsränder, von denen einer der Fig. 11 zu entnehmen ist (Bezugszeichen 149), auf gegenüberliegenden Seiten des Kopfes 34 aufliegen oder in einem Abstand zu diesem verlaufen, der es nicht ermöglicht, dass ein Drehen und damit axiales Verstellen des Zapfens 32 in einem Umfang erfolgt, dass ein Drehen ermöglicht wird.

Andere Ausgestaltungen bzw. Geometrien des als Sicherungselement ausgebildeten zweiten Elements 146 sind gleichfalls möglich. So kann das zweite Element als Formstück ausgebildet sein, das zumindest abschnittsweise formschlüssig mit dem Kopf 34 des Zapfens 32 zusammenwirkt, um ein Drehen des Zapfens 32 zu unterbinden.

Vom Scheitelbereich des Sicherungselementes 146 und in dessen Längsrichtung verlaufend geht ein plattenförmiges Element 150 aus, das sich entlang der Innenseite der Kopfwandung 28 erstreckt und gegebenenfalls an dieser anliegt, so dass ein Kippen des Sicherungselementes 146 bei über den Zapfen 32 eingeleiteter Kraft ausgeschlossen ist und somit das axiale Verstellen verhindert wird.

Ist das Querblech 42 ordnungsgemäß zu der Seitenwandung 48 ausgerichtet, verläuft also das Sicherungselement 146 oberhalb des Kopfes 34 des Zapfens 32, dann erstreckt sich - wie beim ersten Ausführungsbeispiel - das erste Element 44 entlang der Seitenwandung 20.

Zuvor ist ein Verriegelungselement 148 über die dritte Öffnung 24 in das Gehäuse bzw. die Containerecke 12 eingesetzt, damit sodann der außerhalb der Containerecke 12 verlaufende Abschnitt 154, der eine Bohrung 156 aufweist, von dem ersten Element 44 durchsetzt werden kann.

Um ein Herausziehen des Verriegelungselementes 148 auszuschließen, stehen über dessen Umfangsfläche Vorsprünge 160, 162 vor, die sich entlang der Innenfläche der Seitenwandung 20 erstrecken, wenn die Vorsprünge 160, 162 entlang kürzerer, im Ausführungsbeispiel horizontal verlaufender Achse der ovalen Durchbrechung 24 verläuft. Die Vorsprünge 160, 162 sind Endabschnitte eines Bolzens, der das Verriegelungselement 148 durchsetzt.

Der in Bezug auf das Querblech 42 auf der gegenüberliegenden Seite des Verriegelungselementes 148 verlaufende Endabschnitt des insbesondere stabförmigen ersten Elementes 44 weist entsprechend dem ersten Ausführungsbeispiel die Bohrung 58 auf, die zum Verriegeln von einer entsprechenden Verschlusseinrichtung - im Ausführungsbeispiel von dem Bügel 60 des Schlosses 62 - durchsetzt wird.

Ausgestaltungen des Verriegelungselements 148 bzw. des stabförmigen Elements 44 im jeweiligen Endbereich, um die Funktion eines Schlosses zu erfüllen, sind gleichfalls möglich, wie im Zusammenhang mit dem ersten Ausführungsbeispiel erläutert worden ist.

Als Materialien für die erfindungsgemäße Sicherung kommt insbesondere Stahl wie gehärteter Stahl in Frage.

## Patentansprüche

1. Sicherung zwischen einem Beschlag (12), wie Containerecke nach ISO 1161, eines Behälters (10), insbesondere Containers, vorzugsweise Container nach ISO 1496, und einem in den Beschlag eingebrachten einen Kopf (34) aufweisenden Zapfen (32) einer Verriegelung (14), insbesondere Twistlock-Verriegelung, wobei der Beschlag ein Hohlkörper ist, dessen Bodenwandung (15) eine erste Durchbrechung (17) und zwei aneinandergrenzende Seitenwandungen (18, 20) eine zweite und eine dritte Durchbrechung (22, 24) aufweisen, wobei die erste Durchbrechung bei verriegeltem Beschlag von dem Zapfen (32) durchsetzt ist, der seinerseits mit seinem Kopf abschnittsweise auf der Innenfläche der Bodenwandung anliegt, und wobei die Sicherung ein die zweite oder die dritte Durchbrechung (22, 24) durchsetzendes Sicherungselement (46, 48, 146) aufweist, das ein axiales Verstellen des Zapfens (32) unterbindet, **dadurch gekennzeichnet,**
**dass** bei in dem Beschlag (12) eingebrachtem Sicherungselement (46) sich das Sicherungselement zumindest abschnittsweise zwischen dem Kopf (34) des Zapfens (32) und Innenfläche (53) der Kopfwandung des Beschlages (12) erstreckt, und/oder dass bei in dem Beschlag eingebrachten Sicherungselement (146) dieses an einer Seitenfläche (52) des Kopfes (34) angrenzt oder an dieser anliegt.

2. Sicherung nach Anspruch 1,
**dadurch gekennzeichnet,**
**dass** die Sicherung ein plattenförmiges Basiselement (42) aufweist, von dem ein insbesondere stab- oder plattenförmiges erstes Element (44) und beabstandet zu diesem ein insbesondere stab- oder plattenförmiges zweites Element (46, 146) ausgehen, dass bei gesichertem Beschlag (12) sich das Basiselement entlang einer der eine Durchbrechung (22) aufweisenden Seitenwandungen (18) erstreckt, dass das erste Element (44) sich entlang der angrenzenden, eine Durchbrechung (24) aufweisenden Seitenwandung (20) erstreckt und ein Verriegelungselement (48, 148) durchsetzt, das sich abschnittsweise innerhalb des Beschlages erstreckt, und dass das zweite Element (46, 146) die Durchbrechung (22) durchsetzt, entlang der sich das plattenförmige Basiselement (42) erstreckt.

3. Sicherung nach Anspruch 2,
**dadurch gekennzeichnet,**
**dass** das zweite Element (46, 146) das Sicherungselement ist.

4. Sicherung nach zumindest Anspruch 3,
**dadurch gekennzeichnet,**
**dass** das zweite Element (146) zumindest bereichsweise als Formelement ausgebildet ist, das zumindest abschnittsweise formschlüssig mit dem Kopf (34) des Zapfens (32) wechselwirkt.

5. Sicherung nach zumindest Anspruch 3,
**dadurch gekennzeichnet,**
**dass** das zweite Element (146) ein senkrecht zu dem Basiselement (42) verlaufendes in Längsrichtung offenes Hohlzylinderelement ist, dessen Ränder (149) entlang gegenüberliegender Seiten des dachförmig ausgebildeten Kopfs (34) des Zapfens (32) verlaufen oder an diesen anliegen.

6. Sicherung nach zumindest Anspruch 4 oder 5,
**dadurch gekennzeichnet,**
**dass** von dem zweiten Element (146) bzw. dem Hohlzylinderelement ein sich in Richtung Innenfläche (53) der Kopfwandung (28) des Beschlages (12) erstreckendes vorzugsweise plattenförmiges und vorzugsweise in Längsrichtung des zweiten Elements bzw. Hohlzylinderelements verlaufendes Abstandselement (150) ausgeht.

7. Sicherung nach einem der vorhergehenden Ansprüche,
**dadurch gekennzeichnet,**
**dass** das Verriegelungselement (48) das Sicherungselement mit im Schnitt vorzugsweise ovaler Geometrie ist, dessen innerhalb des Beschlags (12) verlaufender Endbereich (50) eine zapfenkopfseitig verlaufende Stufe aufweist, die entlang zumindest einer Seitenfläche (52) des Kopfs (34) des Zapfens (32) und insbesondere abschnittsweise oberhalb von diesem verläuft.

8. Sicherung nach einem der vorhergehenden Ansprüche,
**dadurch gekennzeichnet,**
**dass** der Querschnitt des Verriegelungselements (48) der von dem Verriegelungselement durchsetzten Durchbrechung (24) angepasst ist bzw. diesem entspricht.

9. Sicherung nach einem der vorhergehenden Ansprüche,
**dadurch gekennzeichnet,**
**dass** das erste Element (44) an seinem freien Ende ausgebildet ist, um von einem Verschlusselement (60, 62), wie Bügel (62) eines Schlosses (60), durchsetzt zu werden, oder als solches ausgebildet ist, oder dass das Verriegelungselement (48) zum Unterbinden eines ungewollten Herausziehens des ersten Elementes aus dem Sicherungselement ein Verschlusselement aufweist oder als solches ausgebildet ist.

10. Sicherung nach einem der vorhergehenden Ansprüche,
**dadurch gekennzeichnet,**
**dass** von dem Verriegelungselement (148) und beabstandet von von dem ersten Element (44) durchsetzter Durchbrechung (156) zumindest ein Vorsprung (160, 162) ausgeht, der bei in dem Beschlag (12) eingebrachtem Verriegelungselement entlang Innenfläche der von dem Verriegelungselement durchsetzten Seitenwandung (20) verläuft.

11. Sicherung nach zumindest Anspruch 10,
**dadurch gekennzeichnet,**
**dass** das Verriegelungselement (148) von einem Bolzen durchsetzt ist, der sich zu beiden Seiten des Verriegelungselements erstreckt und den Vorsprung (160, 162) bildet.

12. Verfahren zum Sichern eines Behälters (10), wie Containers, insbesondere Container nach ISO 1496, der durch Eingreifen einer Verriegelung (14), wie Twistlock-Verriegelung, in einen Beschlag (12) des Behälters, insbesondere Containerecke nach ISO 1161, verriegelt wird, wobei der Beschlag (12) ein quaderförmiger Hohlkörper ist, dessen Bodenwandung (15) eine erste Durchbrechung und zwei aneinandergrenzende Seitenwandungen (18, 20) eine zweite und eine dritte Durchbrechung (22, 24) aufweisen, wobei die erste Durchbrechung bei verriegeltem Beschlag von einem Kopf (34) eines Zapfens (32) durchsetzt ist, der mit dem Kopf abschnittsweise auf der Innenfläche der Bodenwandung aufliegt, und wobei in den Beschlag (12) ein Sicherungselement (46, 146) eingebracht wird, das ein axiales Verstellen des Zapfens (32) unterbindet,
**dadurch gekennzeichnet,**
**dass** das Sicherungselement (46, 146) derart in dem Beschlag (12) positioniert wird, dass dieses zwischen dem Kopf (34) des Zapfens (32) und Innenfläche (53) der Kopfwandung (28) zumindest abschnittsweise verläuft und/oder an einer Seitenfläche (52) des Kopfes des Zapfens angrenzt oder an dieser anliegt.

## Claims

1. Securing between a fitting (12) such as a container corner in accordance with ISO 1161, in particular of a container (10), preferably of a freight container in accordance with ISO 1496, and a pin (32) of a lock (14), in particular of a twist lock, inserted into the fitting and having a head (34), said fitting being a hollow body whose bottom wall (15) has a first aperture (17) and whose two adjoining side walls (18, 20) have a second and a third aperture (22, 24), the first aperture being passed through when the fitting is locked by the pin (32), which in turn is in contact by its head with the inner surface of the bottom wall in some sections, and the securing arrangement having a securing element (46, 48, 146) passing through the second or the third aperture (22, 24) and preventing an axial movement of the pin (32), w her e i n the securing element (46) extends at least in some sections between the head (34) of the pin (32) and the inner surface (53) of the top wall of the fitting (12) when the securing element (146) is inserted in the fitting (12), and/or wherein the securing element (146) adjoins or contacts a side surface (52) of the head (34) when it is inserted in the fitting.

2. Securing according to claim 1, **wherein** the securing arrangement has a plate-like base element (42) from which extend an in particular rod-like or plate-like first element (44) and at a distance thereto an in particular rod-like or plate-like second element (46, 146), wherein the base element extends along one of the side walls (18) having an aperture (22) when the fitting (12) is secured, wherein the first element (44) extends along the adjoining side wall (20) having an aperture (24) and passes through a locking element (48, 148) which extends in some sections inside the fitting, and wherein the second element (46, 146) passes through the aperture (22) along which the plate-like base element (42) extends.

3. Securing according to claim 2, **wherein** the second element (46, 146) is the securing element.

4. Securing according to at least claim 3, **wherein** the second element (146) is designed at least in some areas as a shaped element which interacts positively in some sections with the head (34) of the pin (32).

5. Securing according to at least claim 3, **wherein** the second element (146) is a hollow cylinder element vertical to the base element (42) and open in the longitudinal direction whose edges (149) run along or contact opposite sides of the roof-shaped head (34) of the pin (32).

6. Securing according to at least claim 4 or 5, **wherein** a preferably plate-like spacer element (150) extending in the direction of the inner surface (53) of the top wall (28) of the fitting (12) and preferably in the longitudinal direction of the second element or hollow cylinder element extends from the second element (146) or hollow cylinder element.

7. Securing according to one of the preceding claims, **wherein** the locking element (48) is the securing element with a geometry preferably oval in section whose end area (50) inside the fitting (12) has a step on the pin head side which runs along at least one side surface (52) of the head (34) of the pin (32) and in particular above the latter in some sections.

8. Securing according to one of the preceding claims, **wherein** the cross-section of the locking element (48) is adapted to or corresponds to the aperture (24) passed through by the locking element.

9. Securing according to one of the preceding claims, **wherein** the first element (44) is designed at its free end to be passed through by a lock element (60, 62) such as a shackle (62) of a padlock (60) or is designed as such, or wherein the locking element (48) has a lock element or is designed as such to prevent inadvertent removal of the first element from the securing element.

10. Securing according to one of the preceding claims, **wherein** at least one projection (160, 162) extends from the locking element (148) and at a distance from the aperture (156) passed through by the first element (44) and when the locking element is inserted in the fitting (12) runs along the inner surface of the side wall (20) passed through by the locking element.

11. Securing according to at least claim 10, **wherein** the locking element (148) is passed through by a bolt which extends on both sides of the locking element and forms the projection (160, 162).

12. Method for securing a container (10), in particular of a freight container in accordance with ISO 1496, which is locked by engagement of a lock (14) such as a twist lock in a fitting (12) of the container, in particular a container corner in accordance with ISO 1161, said fitting (12) being a cuboid hollow body whose bottom wall (15) has a first aperture and whose two adjoining side walls (18, 20) have a second and a third aperture (22, 24), the first aperture being passed through when the fitting is locked by a head (34) of a pin (32) which is in contact with the inner surface of the bottom wall by its head in some sections, and a securing element (46, 146) being inserted into the fitting (12) that prevents an axial movement of the pin (32), w her e i n the securing element (46, 146) is positioned inside the fitting (12) such that it runs between the head (34) of the pin (32) and the inner surface (53) of the top wall (28) at least in some sections and/or adjoins or contacts a side surface (52) of the head of the pin.

## Revendications

1. Fixation entre une ferrure (12), telle qu'un coin de conteneur selon ISO 1161, d'un récipient (10), notamment d'un conteneur, de préférence d'un conteneur selon ISO 1496, et un tourillon (32) d'un verrouillage (14), notamment d'un verrou tournant, présentant une tête (34) montée dans la ferrure, sachant que la ferrure est un corps creux dont la paroi inférieure (15) présent une première percée (17) et que deux parois latérales adjacentes (18, 20) présentent une deuxième et une troisième percées (22, 24), sachant que lorsque la ferrure est verrouillée, la première percée est traversée par le tourillon (32) dont la tête repose partiellement sur la surface intérieure de la paroi inférieure, et sachant que la fixation présente un élément de fixation (46, 48, 146) traversant la deuxième ou la troisième percée (22, 24) et qui empêche un déplacement axial du tourillon (32), **caractérisée en ce que** dans l'élément de fixation (46) monté dans la ferrure (12), l'élément de fixation (46) s'étend au moins partiellement entre la tête (34) du tourillon (32) et la surface intérieure (53) de la paroi supérieure de la ferrure (12), et/ou que dans l'élément de fixation (146) monté dans la ferrure, l'élément de fixation avoisine une surface latérale (52) de la tête (34) ou repose sur celle-ci.

2. Fixation selon la revendication 1,
**caractérisée en ce**
**que** la fixation présente un élément de base (42) en forme de plaque d'où partent un premier élément (44) notamment en forme de tige ou de plaque et un second élément (46, 146) notamment en forme de tige ou de plaque, écarté du premier élément, que lorsque la ferrure (12) est fixée, l'élément de base s'étend le long d'une des parois latérales (18) présentant une percée (22), que le premier élément (44) s'étend le long de la paroi latérale (20) adjacente présentant une percée (24) et traverse un élément de verrouillage (48, 148) qui s'étend partiellement à l'intérieur de la ferrure et que le second élément (46, 146) traverse la percée (22) le long de la laquelle s'étend l'élément de base (42) en forme de plaque.

3. Fixation selon la revendication 2,
**caractérisée en ce**
**que** le second élément (46, 146) est l'élément de fixation.

4. Fixation selon au moins la revendication 3,
**caractérisée en ce**
**que** le second élément (146) est conçu au moins partiellement sous forme d'élément de forme qui interagit par complémentarité de forme au moins partiellement avec la tête (34) du tourillon (32).

5. Fixation selon au moins la revendication 3,
**caractérisée en ce**
**que** le second élément (146) est un élément à cylindre creux ouvert dans le sens longitudinal et s'étendant perpendiculairement à l'élément de base (42), dont les bords (149) s'étendent le long des côtés opposés de la tête (34) du tourillon (32), conçue sous forme de toit ou reposent sur ces côtés.

6. Fixation selon au moins la revendication 4 ou 5,
**caractérisée en ce**
**qu'**un élément d'espacement (150) de préférence en forme de plaque s'étendant en direction de la surface intérieure (53) de la paroi supérieure (28) de la ferrure (12) et s'étendant de préférence dans le sens longitudinal du second élément ou de l'élément à cylindre creux part du second élément (146) ou de l'élément à cylindre creux.

7. Fixation selon une des revendications précédentes,
**caractérisée en ce**
**que** l'élément de verrouillage (48) est l'élément de fixation avec, en coupe, de préférence une géométrie ovale, dont l'extrémité (50) s'étendant à l'intérieur de la ferrure (12) présente un épaulement s'étendant du côté de la tête du tourillon et qui s'étend le long d'au moins une surface latérale (52) de la tête (34) du tourillon (32) et notamment partiellement au-dessus de celui-ci.

8. Fixation selon une des revendications précédentes,
**caractérisée en ce**
**que** la section de l'élément de verrouillage (48) est ajustée à la percée (24) traversée par l'élément de verrouillage ou lui correspond.

9. Fixation selon une des revendications précédentes,
**caractérisée en ce**
**que** le premier élément (44) est conçu au niveau de son extrémité libre pour être traversé par un élément de fermeture (60, 62), tel que l'anse (62) d'un cadenas (60), ou conçu comme tel, ou que l'élément de verrouillage (48) présente un élément de fermeture pour empêcher l'extraction involontaire du premier élément hors de l'élément de fixation ou est conçu comme tel.

10. Fixation selon une des revendications précédentes,
**caractérisée en ce**
**qu'**au moins une saillie (160, 162) part de l'élément de verrouillage (148) et est écartée de la percée (156) traversée par le premier élément (44), laquelle saillie, lorsque l'élément de verrouillage est monté dans la ferrure (12), s'étend le long de la surface intérieure de la paroi latérale (20) traversée par l'élément de verrouillage.

11. Fixation selon au moins la revendication 10,
**caractérisée en ce**
**que** l'élément de verrouillage (148) est traversé par un goujon qui s'étend des deux côtés de l'élément de verrouillage et forme la saillie (160, 162).

12. Procédé de fixation d'un récipient (10), tel qu'un conteneur notamment un conteneur selon ISO 1496, qui est verrouillé par l'engagement d'un verrouillage (14), tel qu'un verrou tournant, dans une ferrure (12) du récipient, notamment un coin de conteneur selon ISO 1161, sachant que la ferrure (12) est un corps creux parallélépipédique dont la paroi inférieure (15) présente une première percée et que deux parois latérales (18, 20) adjacentes présentent une deuxième et une troisième percée (22, 24), sachant que lorsque la ferrure est verrouillée, la première percée est traversée par la tête (34) d'un tourillon (32) dont la tête repose partiellement sur la surface intérieure de la paroi inférieure, et sachant qu'un élément de fixation (46, 146) qui empêche un déplacement axial du tourillon (32) est logé dans la ferrure (12),
**caractérisé en ce**
**que** l'élément de fixation (46, 146) est positionné dans la ferrure (12) de sorte à s'étendre au moins partiellement entre la tête (34) du tourillon (32) et la surface intérieure (53) de la paroi supérieure (28) et/ou avoisiner une surface latérale (52) de la tête du tourillon ou reposer dessus.
